# EUROPÄISCHE PATENTSCHRIFT

(11) **EP 1 905 379 B1**
(45) Veröffentlichungstag und Bekanntmachung des Hinweises auf die Patenterteilung: **09.12.2009**
(21) Anmeldenummer: 06020237.1
(22) Anmeldetag: 27.09.2006
(51) Int. Cl.: A61C 13/00

(54) **Verfahren zum Konstruieren eines Verbinders**
Method to design a connector
Methode pour construire un connecteur

(43) Veröffentlichungstag der Anmeldung: 02.04.2008
(73) Patentinhaber: DeguDent GmbH, 63403 Hanau-Wolfgang (DE)
(72) Erfinder: Maier, Martin, 37581 Bad Gandersheim (DE); Hilbert, Alexander, 63110 Rodgau (DE)
(74) Vertreter: Stoffregen, Hans-Herbert

(56) Entgegenhaltungen:
- DE-A1-102005 009 873
- US-A- 5 257 203
- US-A- 6 049 743

## Beschreibung

Die Erfindung bezieht sich auf ein Verfahren zum Konstruieren eines Verbinders zwischen einem ersten und einem zweiten Element einer zahntechnischen Rekonstruktion, wie Verbinder zwischen Kappe (Coping) und Kappe oder Kappe und Zwischenglied (Pontic) oder Zwischenglied und Zwischenglied einer Brücke.

In verstärktem Umfang werden zahntechnische Rekonstruktionen im CAD/CAM-Verfahren hergestellt. Dabei werden physisch modellierte Stümpfe gescannt, um sodann aus den Messpunktwolken Modelle zu berechnen, die zur Herstellung des Zahnersatzes benutzt werden. Insoweit wird beispielhaft auf die WO-A-99/47065 oder die WO-A-03/07834 verwiesen.

Die entsprechenden Verfahren führen in Bezug auf Kappen zu überaus befriedigenden Ergebnissen. Allerdings bereitet die Herstellung von Verbindern Probleme. Daher finden sich im Stand der Technik quasi Einheitsgeometrien der Verbinder, die aus rohrförmigen Abschnitten bestehen, die mit den Kappen oder Zwischengliedern verbunden sind, die an den Enden abgerundet sind. Die Enden können dabei bei Verwendung eines Fräsers ausgeblockt sein, um Kanten zu beseitigen.

Dokument US-A-6 049 743 offenbart ein Verfahren zum Konstruieren eines Verbinders zwischen einem ersten und zweiten Element einer zahntechnischen Rekonstruktion, durch:
- Berechnen eines Modells des ersten Elementes und eines zweiten Modells des zweiten Elementes;
- Berechnen von Randkurven (Kurven von Rhombusformen) auf dem ersten Modell und dem zweiten Modell.

Der vorliegenden Erfindung liegt die Aufgabe zu Grunde, einen Verbinder für eine zahntechnische Rekonstruktion zur Verfügung zu stellen, der anatomisch geformt ist und an Positionen und Geometrien der zu verbindenden Elemente individuell angepasst ist.

Zur Lösung der Aufgabe wird ein Verfahren zum Konstruieren eines Verbinders zwischen einem ersten und einem zweiten Element einer zahntechnischen Rekonstruktion vorgeschlagen, das sich dadurch auszeichnet:
- Berechnen eines (ersten) Modells des ersten Elementes und eines (zweiten) Modells des zweiten Elementes,
- Festlegen einer Verbindungsgeraden zwischen dem ersten Modell und dem zweiten Modell,
- Berechnen von Randkurven (γ0, γ4) auf dem ersten Modell und dem zweiten Modell, wobei die Randkurven durch Ursprünge von Flächennormalen der Modelle aufgespannt sind, die zu der Verbindungsgeraden Grenzbedingungen einhalten,
- Berechnen von Offset-Kurven (γ1, γ3) auf dem ersten Modell und dem zweiten Modell aus den ersten Randkurven und
- Verbinden der ersten Randkurven und der Offsetkurven des ersten Modells und des zweiten Modells und Berechnen des Verbinders unter Zugrundelegung des Verlaufs der Verbindung zwischen den Kurven.

Erfindungsgemäß werden die geometrischen Gegebenheiten der über einen Verbinder zu verbindenden Elemente berücksichtigt, um den Verbinder zu konstruieren, d. h. zunächst Daten zu generieren und aus diesen sodann im CAD-CAM-Verfahren den Verbinder zusammen mit den Elementen herzustellen. Es werden digitalisierte Werte der Elemente berücksichtigt, aufgrund der Modelle berechnet werden, die zur Berechnung des Verbinders benötigt werden.

Dabei wird aufgrund der erfindungsgemäßen Lehre insbesondere folgendes Verfahren umgesetzt:
- Scannen eines physischen Modells wie Stumpf,
- Berechnen eines dreidimensionalen Modells aus durch das Scannen ermittelter Messpunktwolke,
- Berechnen aus dem dreidimensionalen Modell ein dreidimensionales Modell der Kappe als das erste oder zweite Modell,
- Parametrisieren des dreidimensionalen Modells der Kappe in einen zweidimensionalen Parameterraum, in dem jeder Punkt einer X-, Y-, Z-Koordinate sowie einem Normalenvektor in dem dreidimensionalen Raum der Kappe entspricht, und
- Ermitteln der ersten Randkurve aus dem parametrisierten zweidimensionalen Raum,
   bzw.
- Berechnen eines dreidimensionalen Modells als das erste oder zweite Modell des aus der Bibliothek ermittelten Zwischenglieds,
- Parametrisieren des dreidimensionalen Modells in einen zweidimensionalen Parameterraum, in dem jeder Punkt einer X-, Y-, Z-Koordinate sowie einem Normalenvektor in dem dreidimensionalen Raum entspricht, und
- Ermitteln der Randkurve aus dem parametrisierten zweidimensionalen Raum.

Auf diese Weise ist es mit einfachen Maßnahmen möglich, die Randkurven unter Berücksichtigung der Grenzbedingungen zu ermitteln bzw. zu berechnen, wobei als eine Grenzbedingung für den Ort der die Randkurve festlegenden Flächennormalen ein Winkel α zwischen der Verbindungsgeraden und der Flächennormalen festgelegt wird. Dabei ist insbesondere α ≤ 90°. Die entsprechende von dem Winkel α abhängige Grenzbedingung reicht insbesondere dann zur Bestimmung der Kontaktfläche zwischen Verbinder und dem ersten bzw. zweiten Element aus, wenn dessen Oberflächenverlauf einen glatten Verlauf derart aufweist, dass Einbuchtungen wie Rillen oder Dellen nicht vorhanden sind. Sind entsprechende als Unstetigkeit zu bezeichnende Oberflächenkonturen vorhanden, bei denen die Flächennormale zur Verbindungsgeraden einen Winkel α mit α ≥ 90° aufweist, so wird als Grenzbedingung für den Ort des Ursprungs der Flächennormalen sowohl der Winkel α der Flächennormalen zu der Verbindungsgeraden als auch ein Winkel β festgelegt.

Der Winkel β verläuft zwischen der Verbindungsgeraden und einer Verbindungslinie zwischen dem Ursprung der Flächennormalen und einem charakteristischen Parameter des ersten bzw. zweiten Elementes wie insbesondere Schwerpunkt. Dabei muss die Bedingung erfüllt sein, dass (α + β) : 2 ≥ ϕ ist. Wird der Winkel ϕ erreicht, der als Schwellwert zu bezeichnen ist, so wird abgebrochen, d. h., der Punkt in dem zweidimensionalen Parameterraum, bei dem die Grenzbedingung (α + β): 2 = ϕ erreicht wird, wird als Punkt der Randkurve γ0, γ4 bestimmt. Dabei sollte ϕ betragen: 30° ≤ ϕ ≤ 90°, insbesondere 70° ≤ ϕ ≤ 90°.

Rechnerisch wird derart vorgegangen, dass auf Strahlen, die von einem Punkt im zweidimensionalen Parameterraum ausgehen, der dem Durchstoßpunkt der Verbindungsgeraden durch das dreidimensionale Modell entspricht, Überprüfungen vorgenommen werden, ob die vorgegebenen Grenzbedingungen eingehalten sind, wobei dann die Berechnung abgebrochen wird, wenn eine vorgegebene Grenzbedingung nicht mehr erfüllt ist. Dieser Punkt auf dem Strahl ergibt sodann die Koordinaten eines Punktes auf der Randkurve γ0, γ4.

Mit anderen Worten wird die Randkurve γ0, γ4 durch die Koordinaten der Ursprünge der Normalen festgelegt, bei denen die Grenzbedingung (α + β) : 2 ≅ ϕ erfüllt ist. Punkte, bei denen (α + β) : 2 < ϕ ist, liegen innerhalb der von der zu ermittelten Randkurve umgebenen Fläche und infolgedessen Punkte mit der Bedingung (α + β) : 2 > ϕ außerhalb der Randkurve.

Als weitere Grenzbedingung für die Randkurve (γ0, γ4) kann ein einzuhaltender Verblendabstand zur Präparationsgrenze des ersten und/oder zweiten Elementes (Coping) festgelegt werden.

In Weiterbildung der Erfindung ist vorgesehen, dass zwischen dem ersten und dem zweiten Element und von der Verbindungsgeraden durchsetzt eine dritte Kurve γ2 festgelegt wird, die mit den ersten Randkurven und den Offset-Kurven verbunden wird und aus so erhaltenen Verbindungen der Verlauf des Verbinders ausgerichtet wird.

Dienen die Randkurven und Offset-Kurven, die reduzierte Kurven der Randkurven sind, zur Konstruktion eines tangentialen Übergangs zwischen Verbinder und dem ersten bzw. zweiten Element, wobei der Verkleinerungsfaktor V zwischen den Kurven zwischen 0,0 < V < 1,0, insbesondere im Bereich zwischen 0, 1 ≤ V ≤ 0,4 liegen sollte, so wird durch die weitere Kurve γ2 der erforderliche Mindestquerschnitt des Verbinders zur Sicherstellung der Festigkeit und des E-Moduls bestimmt.

Allerdings ist darauf hinzuweisen, dass es nicht zwingend erforderlich ist, dass eine dritte Kurve γ2 berücksichtigt wird. Vielmehr kann allein zur Berechnung des Verbinders die Nebenbedingung vorgegeben werden, dass der Verbinder zwischen den zu verbindenden Elementen einen Mindestquerschnitt aufweisen muss, der von der Position und der Art der zu verbindenden Elemente abhängig ist.

Die Verbindungsgerade selbst sollte vorzugsweise die Schwerpunkte des ersten und zweiten Elementes bzw. deren Modelle durchsetzen, gleichwenn andere charakteristische Größen gleichfalls Bezugspunkte sein können. So kann die Verbindungsgerade die Pseudorotationsachsen oder die Hauptträgheitsachsen der Elemente bzw. deren Modelle schneiden, um einen Verlauf festzulegen.

Soll eine zahntechnische Rekonstruktion mit einem Zwischenglied hergestellt werden, so ist zunächst dessen Lage in der zahntechnischen Rekonstruktion festzulegen. Hierzu wird zunächst der abzudeckende Kieferbogen bestimmt. Als Hilfsmittel wird eine Bibliothek benutzt. Diese enthält statistische Modelle, die Zahnbögen als Folge von speziellen Punktkoordinaten für jede Zahnposition im kartesischen Raum abbildet. Die Koordinatenwerte selbst werden durch Mittelwertmessung von gescannten Kiefermodellen bestimmt.

Sind die mit der zahntechnischen Rekonstruktion versehenen Stümpfe in Position und Form bekannt, lässt sich die Position des oder der Zwischenglieder berechnen, um sodann ausgehend von der entsprechenden berechneten Position die Verbindungsgerade zu dem zu verbindenden benachbarten Element, also einem weiteren Zwischenglied oder einer Kappe zu berechnen.

Es wird folglich für die Positionierung der Pontics das statistische Modell herangezogen, das den Mittelpunkt der Placierung sowie die Ausdehnung des Pontics in Richtung des Kieferbogens liefert. Dabei werden die Positionen der zu verbindenden Stümpfe und deren zahntechnische Bezeichnung berücksichtigt.

Von den aus der Bibliothek abgerufenen Daten des dreidimensionalen Modells des Pontics wird entsprechend der Verfahrensweise bei Stümpfen ein dreidimensionales Modell berechnet, um sodann durch Parametrisieren einen zweidimensionalen Parameterraum zu erhalten, wie dies zuvor erläutert wurde.

Hinsichtlich der Stümpfe ist anzumerken, dass zu deren Formbestimmung diese dreidimensional von allen Seiten vermessen und sodann die so erhaltenen Punktwolken zusammengesetzt werden. Aus den so gewonnenen Daten werden in zuvor beschriebener Weise die Rand- und Offset-Kurven ermittelt bzw. berechnet.

Die dritte Kurve γ2 weist insbesondere eine Kreisform auf, die mittig von einer zweiten Schwerpunktgeraden durchsetzt wird, die zwischen den Schwerpunkten der Randkurven γ0, γ4 verläuft. Dabei erfolgt zusätzlich eine Ausrichtung derart, dass die dritte Kurve von der zweiten Schwerpunktgeraden in der Mitte zwischen den Schwerpunkten durchsetzt wird.

Des Weiteren verläuft die dritte Kurve in einer Ebene, die von Richtungsvektoren aufgespannt wird, die von Mitten von weiteren dritten Schwerpunktgeraden ausgehen, die zwischen Schwerpunkten von Segmenten der ersten Randkurven verlaufen.

Dabei ist insbesondere vorgesehen, dass jede Randkurve in drei gleiche Segmente aufgeteilt wird und dass von jedem Schwerpunkt der Segmente eine der dritten Schwerpunktgeraden ausgeht. Ein diesbezügliches Verfahren ist auf einfache Weise durchführbar, da es sich bei den Randkurven um parametrisierte Kurven handelt.

Selbstverständlich bestünde auch die Möglichkeit, die von den Randkurven umgebenen Flächen als Basis für die Ermittlung der Richtungsvektoren zu wählen. In diesem Fall könnten die von den Randkurven umgebenen Flächen in drei gleiche Teilflächen aufgeteilt werden, deren Schnittpunkt in dem Schwerpunkt der Fläche liegt. Sodann würden von den Schwerpunkten der gleichen Fläche die dritten Schwerpunktgeraden ausgehen.

Des Weiteren sollte die dritte Kurve γ2 einen Radius aufweisen, der in etwa der halben Summe der mittleren Radien der ersten Randkurven entspricht.

Ferner wird vorgeschlagen, dass gingivale Seite des Zwischengliedes unter Berücksichtigung des Verlaufs des Zahnfleisches einen Mindestabstand zu diesem aufweist. Dabei sollte die gingivale Seite, die auch als Südpol des Zwischengliedes bezeichnet werden kann, aus hygienischen und ästhetischen Gründen in vestibulärer Richtung vor dem Grat der Gingiva liegen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden Ausführungsbeispielen und Erläuterungen.

Es zeigen:
- Fig. 1: eine Prinzipdarstellung eines Verlaufs einer herzustellenden zahntechnischen Rekonstruktion,
- Fig. 2: eine Prinzipdarstellung zur Bildung eines Modells einer Kappe,

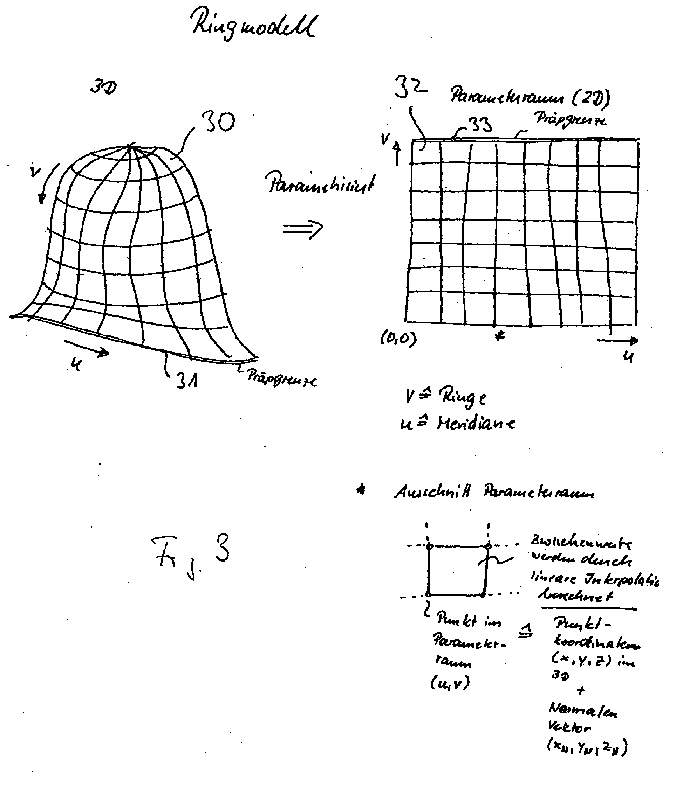

- Fig. 3: Erläuterungen des Modells gemäß Fig. 2 und dessen Parametrisierung,
- Fig. 4: eine Prinzipdarstellung zur Erläuterung von Grenzbedingungen,
- Fig. 5: eine Prinzipdarstellung zur Erläuterung von Abbruchkriterien,
- Fig. 6: Prinzipdarstellungen zum Positionieren einer dritten Kurve,

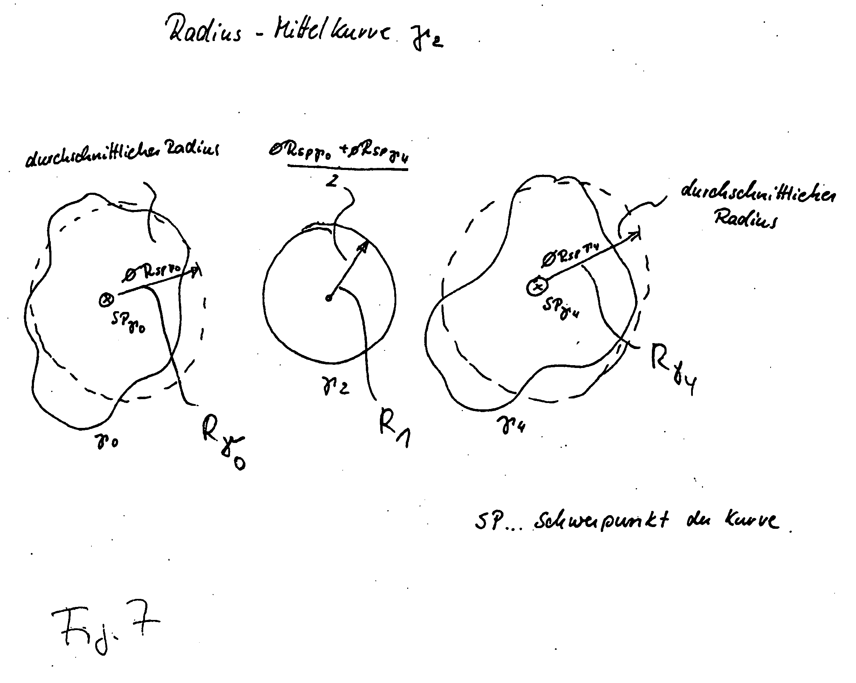

- Fig. 7: Darstellungen zur Verdeutlichung der Berechnung des Radius der dritten Kurve gemäß Fig. 6 und
- Fig. 8: eine Begrenzungskurve eines Verbinders.

Anhand der Figuren soll rein prinzipiell das erfindungsgemäße Verfahren zur Konstruktion eines Verbinders zwischen Elementen einer zahntechnischen Rekonstruktion erläutert werden, wobei der Verbinder selbst zusammen mit den angrenzenden Elementen letztendlich im CAD-CAM-Verfahren hergestellt wird, wie dies nach dem Stand der Technik erfolgt.

Das Herstellen kann dabei in einer Art durchgeführt werden, wie diese z. B. der WO-A-99/47065 oder der WO-A-03/007834 zu entnehmen ist.

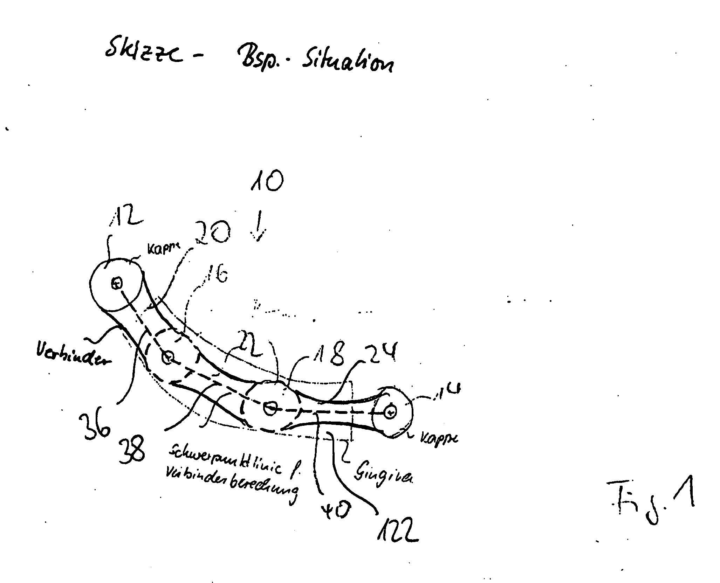

In Fig. 1 ist eine viergliedrige Brücke 10 als herzustellende zahntechnische Restauration in Draufsicht dargestellt. Die Brücke umfasst dabei Kappen 12, 14, Zwischenglieder oder Pontics 16, 18 sowie zwischen den Kappen 12, 14 und den Zwischengliedern 16, 18 sowie zwischen den Zwischengliedern 16, 18 selbst verlaufende Verbinder 20, 22, 24. Die Position der von den Kappen 12, 14 umgebenden präparierten Stümpfe wird durch Abdruck und Scannen dieses oder unmittelbaren Scannens der Stümpfe oder Scannen der Positivmodelle der Stümpfe ermittelt. Sodann werden unter Berücksichtigung der bekannten Positionen der Stümpfe und dem bekannten Kieferbogenabschnitt aus einer Bibliothek unter Zugrundelegung eines statistischen Modells die Positionen der Zwischenglieder 16, 18 berechnet, damit die zahntechnische Rekonstruktion 10 dem Verlauf des Kieferbogens folgt. Aus der Bibliothek werden auch Daten der Zwischenglieder 16, 18 abgerufen, so dass digitalisierte Daten von deren Oberflächen vorliegen, mit denen entsprechend der nachstehend erfolgten Erläuterungen im Zusammenhang mit den Kappen 12, 14 Verfahrensweisen durchgeführt werden, um die Verbinder 20, 22, 24 zu den Zwischengliedern 16, 18 auszurichten und den Übergang der Außenflächen der Verbinder 20, 22, 24 zu den Außenflächen der Zwischenglieder 16, 18 festzulegen.

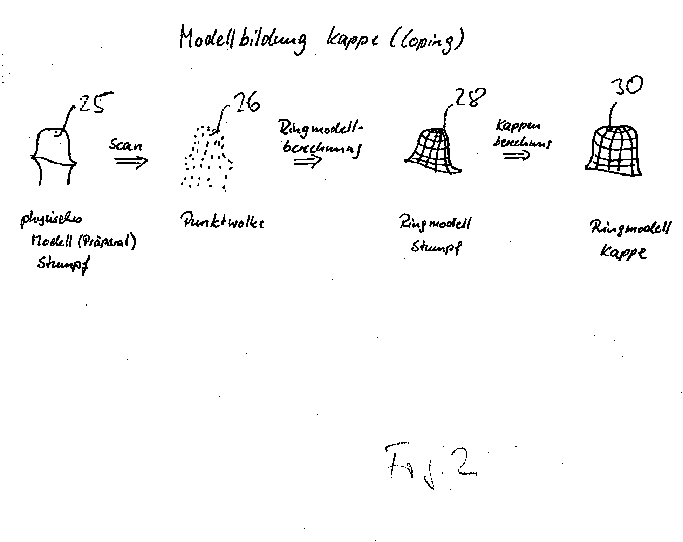

In einem hiervon unabhängigen Schritt werden die Stümpfe oder physische Modelle 25 von diesen gescannt, wobei eine dreidimensionale Erfassung von allen Seiten erfolgt. Die ermittelten Punktwolken werden sodann zusammengesetzt. Eine entsprechende Punktwolke 26 ist prinzipiell in der Fig. 2 dargestellt.

Aus der jeweiligen Punktwolke 26 wird anschließend ein als Ringmodell bezeichnetes dreidimensionales Modell 28 des Stumpfes 25 berechnet. Sodann wird unter Berücksichtigung einer zwischen der Kappe 12, 14 und dem Stumpf 25 verlaufenden Zementschicht ein dreidimensionales Modell 30 der Kappe 12, 14 berechnet. Dieses ist ebenfalls als Ringmodell 30 zu bezeichnen und besteht aus einem Gitter von dreidimensionalen Punkten, in dem die Ringe mit V und die Meridiane mit U gekennzeichnet sind.

Ein entsprechendes Modell wird auch zur Darstellung der aus der vorhandenen Bibliothek abgerufenen Pontics oder Zwischenglieder 16, 18 benutzt.

Das dreidimensionale Ringmodell 30 wird sodann in einen zweidimensionalen Parameterraum 32 parametrisiert, wobei in der zeichnerischen Darstellung die Präpgrenze, also die Präparationsgrenze 31 zwischen Käppchen und Zahnfleisch dem oberen Rand 33 des zweidimensionalen Parameterraums 32 entspricht. Es erfolgt dabei eine Parameterdarstellung, die nicht mehr diskret ist, wobei Zwischenwerte durch lineare Interpolation berechnet werden. Dabei entspricht jeder Punkt einer X-, Y-, Z-Koordinate im Ringmodell 30 sowie einem Normalenvektor Xn, Yn, Zn, ausgehend von einem Punkt von der Oberfläche des Ringmodells 30.

Mit anderen Worten wird erfindungsgemäß die Oberfläche des herzustellenden Käppchens abgewickelt, so dass ein zweidimensionaler Rechenraum zur Verfügung steht, wobei gleichzeitig von einer diskreten auf eine stetige Adressierbarkeit übergegangen wird.

Um die Fläche auf dem herzustellenden Käppchen 12, 14 bzw. dem Zwischenglied 16, 18 festzulegen, von der der Verbinder 20, 22, 24 ausgeht, wird erfindungsgemäß wie folgt vorgegangen.

Die Kontaktfläche zwischen dem Verbinder 20, 22, 24 und dem Käppchen bzw. dem Zwischenglied 12, 14, 16, 18 wird durch Grenzbedingungen der Oberflächennormalen der den Elementen, also den Kappen 12, 14 und Zwischengliedern 16, 18 zugeordneten Ringmodelle festgelegt, die sich unmittelbar aus dem 2D-Parameterraum 32 ergeben. Zuvor wird jedoch eine Verbindungslinie zwischen den zu verbindenden Elementen 12, 14, 16, 18 festgelegt, entlang der der zu konstruierende Verbinder 22, 24 verläuft.

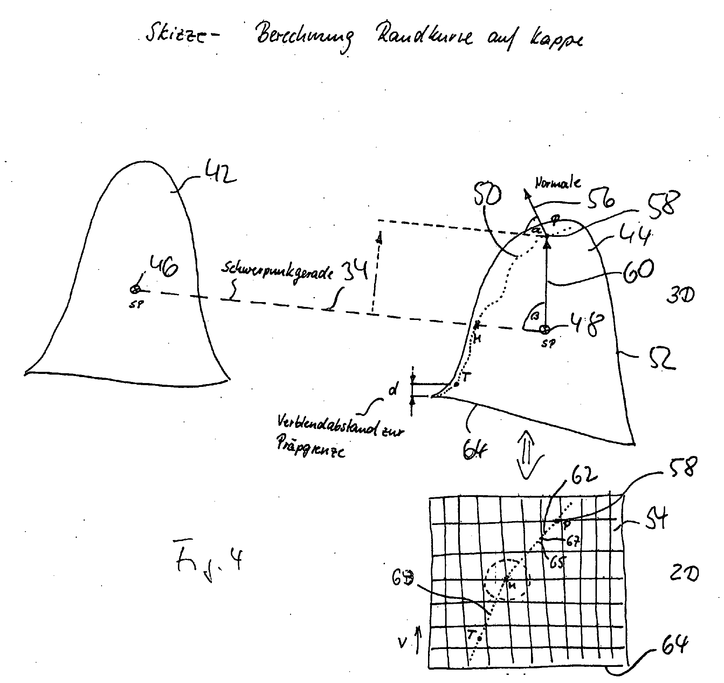

Im Ausführungsbeispiel werden die Verbindungsgeraden durch Geraden 34, 36, 38, 40 festgelegt, die die Schwerpunkte der zu verbindenden Elemente 12, 14,1 6, 18 durchsetzen. Dies ist in der Fig. 4 anhand von zwei Käppchen repräsentierenden dreidimensionalen Ringmodellen 42, 44 veranschaulicht.

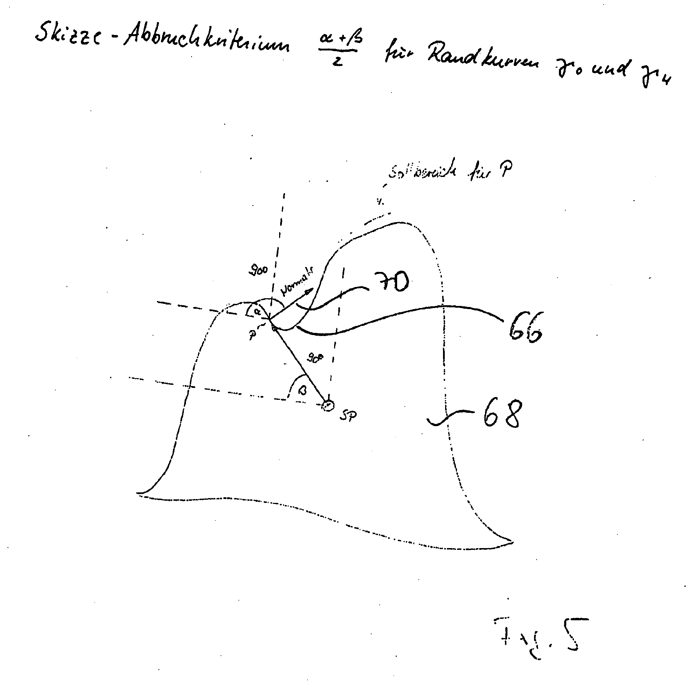

Die Gerade 34 durchsetzt die Schwerpunkte der Käppchen und damit die Schwerpunkte 46, 48 der Modelle 42, 44, wobei der Durchstoßpunkt der Geraden 34 durch das dreidimensionale Modell 44 mit M gekennzeichnet ist. Der Punkt M verläuft dabei auf dem gestrichelten Oberflächenbereich 50 des 3D-Modells 44. Die durchgezogene Linie 52 stellt das 3D-Modell 44 in Seitenansicht dar. Der Punkt M hat einen Wert in dem zweidimensionalen Parameterraum 54 entsprechend den Angaben in Fig. 4. Sodann wird in dem zweidimensionalen Parameterraum 54 eine Kurve bestimmt, die einer Randkurve γ0 bzw. γ4 in dem Ringmodell 42, 44 und damit auf den diesen zuzuordnenden Kappen entspricht, die die Kontaktfläche zwischen der Kappe und dem von dieser ausgehenden Verbinder festlegt. Hierzu werden von dem Punkt M ausgehend Strahlen in den zweidimensionalen Parameterraum 54 gelegt, von denen zwei beispielhaft mit den Bezugszeichen 62, 63 gekennzeichnet sind, Entlang der Geraden 62, 63 wird sodann in vorgegebenen Abständen, die in der Zeichnung beispielhaft durch die einzelnen Punkte 67, 65, die die Geraden 62, 63 bilden, symbolisiert werden, der Verlauf der Normalen in den einzelnen Punkten 67, 65 ermittelt, um zu überprüfen, ob Grenzbedingungen eingehalten oder überschritten sind. Bevorzugterweise hängen die Grenzbedingungen von dem Winkel α zwischen den den Punkten zugeordneten Normalen und der Schwerpunktgeraden 34 ab, die rechnerisch durch den Ursprung der Normalen verschoben wird. Dies wird in der Fig. 4 anhand des Punktes 58 verdeutlicht. Des Weiteren wird ein Winkel β berücksichtigt, der zwischen der Schwerpunktgeraden 34 und der Verbindung zwischen dem Schwerpunkt 48 und dem Ursprung der jeweiligen Normalen verläuft, also in Fig, 4 zwischen dem zwischen dem Ursprung 58 und Normalen 56 und dem Schwerpunkt 48 verlaufenden Vektor 60 und der Schwerpunktgeraden 34. Die Grenzbedingung ist dann überschritten, wenn (α + β): 2 ≥ ϕ mit vorzugsweise 30° ≤ ϕ ≤ 90°, insbesondere 70° ≤ ϕ ≤ 90° ist. Der Winkel β wird berücksichtigt, um auch dann optimal große Kontaktflächen zwischen Verbinder und Kappe zu konstruieren, wenn diese lokale Einbuchtungen aufweist, wie dies anhand der Fig. 5 verdeutlicht wird.

Der gesamte zweidimensionale Parameterraum 54 wird sodann unter Berücksichtigung dieser Kriterien überprüft und als Randpunkte der zu ermittelnden Randkurve γ0, γ4 werden diejenigen berücksichtigt, bei denen auf einem von Punkt M ausgehenden Strahl die Grenzbedingung (α + β) : 2 ≅ ϕ erreicht ist. Ist die Grenzbedingung erreicht, werden die Berechnungen auf dem entsprechenden Strahl abgebrochen und der entsprechende Punkt zur Festlegung der Randkurve berücksichtigt. Ergänzend wird am unteren Rand, also der Präparationsgrenze 64, ein Abstand d zur Präparationsgrenze eingehalten, um ein Verblenden der Kappe zu ermöglichen. Der einzuhaltende Abstand d ist folglich eine weitere Grenzbedingung.

Die Fig. 5 verdeutlicht, dass die Randkurve γ0, γ4 auch Bereiche des 3D-Modells und damit der Kappe umschließen kann, die eine Einbuchtung 66 aufweisen. So weist die Kappe und damit das 3D-Modell 68 eine Delle 66 auf, bei der allerdings die Kriterien (α + β) : 2 ≤ ϕ erfüllt sind mit der Folge, dass die Randkurve durch Punkte festgelegt wird, die in der zeichnerischen Darstellung rechts von der Delle 66 verlaufen. In der Fig. 5 ist der Schwerpunkt mit SP und der Ursprung der eingezeichneten Normalen 70 mit P bezeichnet. Die Winkel α und β entsprechen denen in der Darstellung der Fig. 4.

Nachdem die Randkurven γ0, γ4 ermittelt worden sind, werden Offset-Kurven γ1, γ3 berechnet, wobei ein Verkleinerungsfaktor V zwischen 0,0 < V < 1,0 berücksichtigt wird. Bevorzugterweise sollte der Faktor zwischen 0,1 und 0,4 liegen.

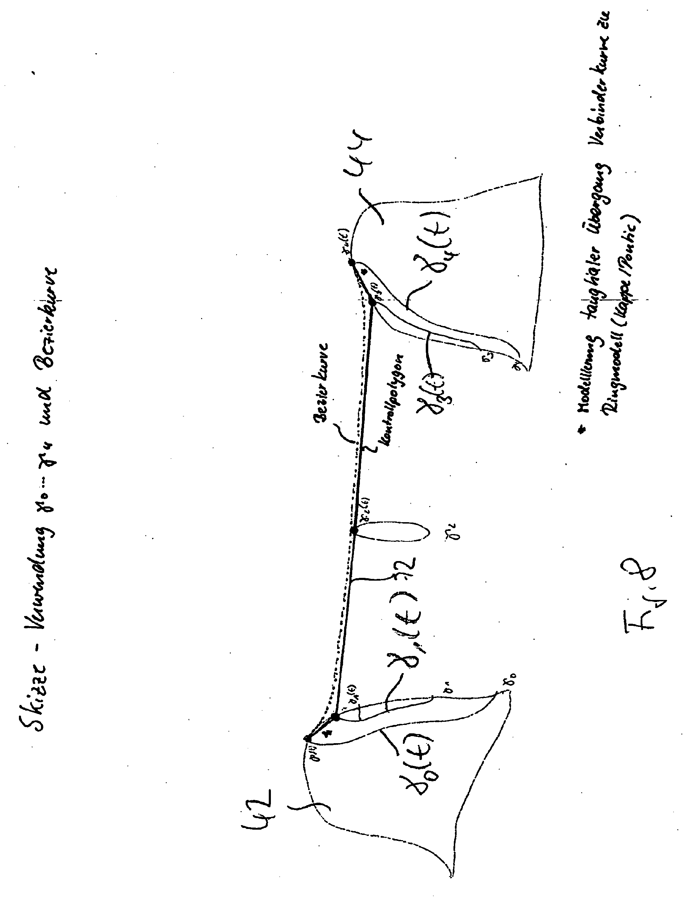

Die Randkurven γ0, γ4 und die reduzierten Kurven γ1, γ3, die auf dem jeweiligen Ringmodell 42, 44 verlaufen, werden sodann zur Konstruktion des tangentialen Übergangs des Verbinders zwischen den Ringmodellen von Stümpfen bzw. dem Ringmodell von Stumpf und Zwischenglied benutzt, wie dies anhand der Fig. 8 nachfolgend erläutert wird.

Zuvor wird jedoch eine weitere Kurve γ2 festgelegt, die zusammen mit den Kurven γ0, γ1, γ3, γ4 den Verlauf des Verbinders vorgibt, wobei der Verbinder auf Verbindungslinien gleicher Parameter zwischen den Kurven γ0, γ1, γ3, γ4 ausgerichtet wird. Die Verbindungslinien, von denen eine in Fig. 8 mit dem Bezugszeichen 72 dargestellt ist, dient als Kontrollpolygon, an das eine eindimensional parametrisierte Kurve wie Bezier-Kurve, NURBS-Kurve oder Splines-Kurve ausgerichtet ist.

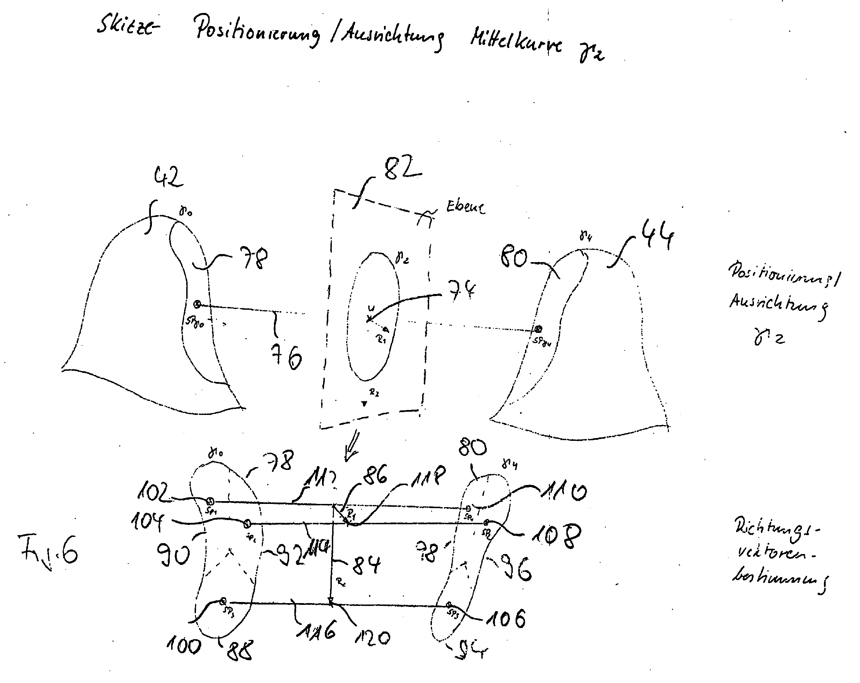

Die Kurve γ2 wird gemäß der Fig. 6 wie folgt festgelegt. Bei der Kurve γ2 handelt es sich bevorzugterweise um einen Kreis, dessen Mittelpunkt 74 von einer weiteren (zweiten) Schwerpunktgeraden 76 durchsetzt wird, die von den Schwerpunkten der die Flächen 78, 80 umschließenden Randkurven γ0, γ4 ausgeht. Dabei verläuft der Mittelpunkt 74 der Kurve γ2 in der Mitte der Geraden 76. Die Kurve γ2 verläuft des Weiteren in einer Ebene 82, die durch Richtungsvektoren 84, 86 aufgespannt wird, die wie folgt festgelegt werden. Die Randkurven γ1, γ4 werden jeweils in drei gleiche Segmente 88, 90, 92, 94, 96, 98 im Parameterraum aufgeteilt. Sodann wird für jedes Segment 88, 90, 92, 94, 96 der Schwerpunkt 100, 102, 104, 106, 108, 110 berechnet. Die Schwerpunkte gleicher Segmente werden durch Geraden 112, 114, 116 (dritte Schwerpunktgeraden) verbunden. Von der Mitte einer der Geraden 112, 114, 116 gehen sodann die Vektoren 84, 86 aus, die in der Mitte der benachbarten Geraden 114, 116 enden. Die Enden der Richtungsvektoren 84, 86, also die Punkte 118, 120 sowie der Mittelpunkt 74 der Kurve γ2 legen sodann deren Ebenenverlauf fest.

Weist die Kurve vorzugsweise die Form eines Kreises auf, so sind andere Geometrien wie ein Viereck gleichfalls möglich. Entsprechend würden geänderte Berechnungen durchgeführt werden. Die dritten Schwerpunktgeraden können auch dadurch ermittelt werden, dass nicht die Randkurven γ0, γ4 in gleich lange Segmente unterteilt werden, sondern die von den Randkurven γ0, γ4 umgebenen Flächen 78, 80 werden in drei gleiche Teile aufgeteilt, wobei der Schnittpunkt der gleichen Flächen im Schwerpunkt der Flächen 78, 80 liegt. Die Schwerpunkte der Teilflächen der Flächen 78, 80 werden sodann verbunden, um die dritten Schwerpunktgeraden festzulegen.

Die Berechnung über die Randkurven γ0, γ4 ist jedoch einfach, da es sich um parametrisierte Kurven handelt.

Der Radius R1 der Kurve γ2 wird dadurch festgelegt, dass aus den Randkurven γ0 und γ4 ein durchschnittlicher Radius R γ0 und R γ4 ermittelt und deren Summe durch zwei geteilt wird. Der jeweilige Radius Rγ0 und Rγ4 geht dabei vom Schwerpunkt der Randkurve γ0 und γ4 aus.

Wie zuvor erläutert worden ist, werden Punkte gleicher Parameter der Kurven γ1, γ2, γ3, γ4 miteinander verbunden, an die sodann eindimensional parametrisierte Kurven wie Bezier-Kurven angepasst werden, wobei die Tangentialität der so berechneten Verbinder zu den 3D-Modellen 42, 44 durch die Randkurven γ0, γ4 und die zugeordneten reduzierten Offset-Kurven γ1, γ3 vorgegeben wird.

Des Weiteren wird bezüglich des Zwischengliedes bzw. Pontics der herzustellenden Rekonstruktion der Verlauf der Gingiva 122 berücksichtigt, die zuvor gescannt wird. Dabei wird das aus den Daten der Bibliothek berechnete 3D-Modell des Zwischenstücks derart gingival verzerrt, dass ein Mindestabstand gewahrt ist. Dieser sollte im Bereich von 2 mm liegen.

## Patentansprüche

1. Verfahren zum Konstruieren eines Verbinders 20, 22, 24 zwischen einem ersten und zweiten Element (12, 14, 16, 18) einer zahntechnischen Rekonstruktion, wie Verbinder zwischen Kappe (12, 14) und Kappe (12, 14) oder Kappe (12, 14) und Zwischenglied (16, 18) oder Zwischenglied (16, 18) und Zwischenglied (16, 18) einer Brücke (10);
**durch**
- Berechnen eines ersten Modells (42) des ersten Elementes und eines zweiten Modells (44) des zweiten Elementes,
- Festlegen einer Verbindungsgeraden (34, 36, 38, 40) zwischen dem ersten Modell und dem zweiten Modell,
- Berechnen von Randkurven (γ0, γ4) auf dem ersten Modell (42) und dem zweiten Modell (44); wobei die Randkurven durch Ursprünge von Flächennormalen (56) der Modelle aufgespannt sind, die zu der Verbindungslinie Grenzbedingungen einhalten,
- Berechnen von Offset-Kurven (γ1, γ3) auf dem ersten Modell (42) und dem zweiten Modell (44) aus den ersten Randkurven und
- Verbinden der ersten Randkurven (γ0, γ4) und der Offsetkurven (γ1, γ3) des ersten Modells und des zweiten Modells und Berechnen des Verbinders unter Zugrundelegung des Verlaufs der Verbindung zwischen den Kurven.

2. Verfahren nach Anspruch 1,
wobei
zwischen dem ersten Modell (42) und dem zweiten Modell (44) und von der Verbindungsgeraden (76) durchsetzt eine dritte Kurve (γ2) festgelegt wird und wobei der Verlauf des Verbinders auf die Verbindungen zwischen den ersten Randkurven (γ0, γ4), den Offsetkurven (γ1, γ3) und der dritten Kurve (γ2) ausgerichtet wird.

3. Verfahren nach Anspruch 1 oder 2,
wobei
als Grenzbedingung für Ort des Ursprungs der die Randkurve (γ0, γ4) festlegenden Flächennormalen (56) ein Winkel α zwischen der Verbindungsgeraden und der Flächennormalen (56) festgelegt wird.

4. Verfahren nach zumindest einem der vorhergehenden Ansprüche,
wobei
als Grenzbedingung für Ort des Ursprungs der die Randkurve (γ0, γ4) festlegenden Flächennormalen (56) ein einzuhaltender Verblendabstand (d) zur Präparationsgrenze (64) des ersten und/oder zweiten Elementes festgelegt wird.

5. Verfahren nach zumindest einem der vorhergehenden Ansprüche,
wobei
als Grenzbedingung für den Ort des Ursprungs der die Randkurve (γ0, γ4) festlegenden Flächennormalen (56) der Winkel α zwischen der Flächennormalen (56) und der Verbindungsgeraden und ein Winkel β festgelegt werden, der zwischen der Verbindungsgeraden (34) und einer zwischen dem Ursprung der Flächennormale (56) und einem für das erste oder zweite Modell charakteristischen Punkt wie Schwerpunkt (48) verlaufenden Linie verläuft, wobei (α + β) : 2 ≅ ϕ mit 30° ≤ ϕ ≤ 90°, insbesondere 70° ≤ ϕ ≤ 90° ist.

6. Verfahren nach zumindest einem der vorhergehenden Ansprüche,
wobei
die Verbindungsgerade zwischen dem ersten und zweiten Modell deren Schwerpunkte (46, 48) und/oder Pseudorotationsachsen und/oder Hauptträgheitsachsen durchsetzt.

7. Verfahren nach Anspruch 1, wobei zumindest ein Element ein Zwischenglied (Pontic) ist,
wobei
Daten für Position und Größe des Zwischengliedes für die herzustellende zahntechnische Rekonstruktion einer Datenbibliothek entnommen und sodann die Verbindungsgerade festgelegt wird.

8. Verfahren nach Anspruch 1,
mit den Verfahrensschritten:
- Scannen eines physischen Modells (25) wie Stumpf,
- Berechnen eines dreidimensionalen Modells (28) aus durch das Scannen ermittelter Messpunktwolke (26) ;
- Berechnen aus dem dreidimensionalen Modell (28) eines dreidimensionalen Modell (30) der Kappe (12, 14) als das erste oder zweite Modell,
- Parametrisieren des dreidimensionalen Modells (30) der Kappe in einen zweidimemionalen Parameterraum (32); in dem jeder Punkt einer X-, Y-, Z-Koordinate sowie einem Normalenvektor in dem dreidimensionalen Raum der Kappe entspricht, und
- Ermitteln der ersten Randkurve (γ0, γ4) aus dem parametrisierten zweidimensionalen Raum.

9. Verfahren nach Ansprach 1,
mit den Verfahrensschritten:
- Berechnen eines dreidimensionalen Modells als das erste oder zweite Modell des aus der Bibliothek ermittelten Zwischenglieds (16, 18);
- Parametrisieren des dreidimensionalen Modells in einen zweidimensionalen Parameterraum (32), in dem jeder Punkt einer X-, Y-, Z-Koordinate sowie einem Normalenvektor in dem dreidimensionalen Raum entspricht und
- Ermitteln der Randkurve (γ0, γ4) aus dem parametrisierten zweidimensionalen Raum.

10. Verfahren nach Anspruch 9,
wobei
Verrundungsradien zwischen dem Verbinder (20, 22, 24) und dem ersten bzw. zweiten Element durch den Verlauf der Randkurve (γ0, γ4) und der aus dieser berechneten Offsetkurve (γ1, γ3) berechnet werden.

11. Verfahren nach zumindest einem der vorhergehenden Ansprüche,
wobei
die dritte Kurve γ2 eine Kreisform aufweist, die mittig von einer zweiten Schwerpunktgeraden (76) durchsetzt wird, die zwischen den Schwerpunkten der Randkurven oder der von den Randkurven umgebenen Flächen (78,80) verläuft.

12. Verfahren nach Anspruch 11,
wobei
die dritte Kurve (γ2) von der zweiten Schwerpunktperaden (76) in der Mitte zwischen den Schwerpunkten durchsetzt wird.

13. Verfahren nach Anspruch 11 oder 12,
wobei
die dritte Kurve (γ2) in einer Ebene (82) verläuft, die von Richtungsvektoren aufgespannt wird, die von Mitten von weiteren dritten Schwerpunktgeraden (112, 114, 116) ausgehen, die zwischen Schwerpunkten von gleichen Segmenten (88, 90, 92, 94, 96, 98) der Randkurven oder von Flächenbereichen der von den Randkurven umgebenen Flächen des ersten und zweiten Modells verlaufen.

14. Verfahren nach Anspruch 13,
wobei
jede Randkurve (γ0, γ4) in drei gleiche Segmente (88, 90, 92, 94, 96, 98) aufgeteilt wird und dass von jedem Schwerpunkt (100, 102, 104, 106, 108, 110) der Segmente eine der dritten Schwerpunktgeraden (112, 114, 116) ausgeht.

15. Verfahren nach zumindest einem der Ansprache 11 bis 14,
wobei
die dritte Kurve (γ2) einen Radius aufweist, der der halben Summe der mittleren Radien der Randkurven (γ0, γ4) des ersten und zweiten Modells entspricht oder in etwa entspricht.

16. Verfahren nach zumindest einem der Ansprüche 11 bis 15,
wobei die
gingivale Seite des Zwischengliedes (16, 18) unter Berücksichtigung des Verlaufs des Zahnfleischs einen Mindestabstand zu diesem aufweist.

17. Verfahren nach zumindest einem der Ansprüche 11 bis 15,
wobei
die Randkurve (γ2) eine von einem Kreis abweichende Geometrie wie Vieleckgeometrie aufweist.

## Claims

1. A method for designing a connector (20, 22, 24) between a first and second element (12, 14, 16, 18) of a dental restoration, such as connectors between coping (12, 14) and coping (12, 14), or coping (12, 14) and pontic (16, 18), or pontic (16, 18) and pontic (16, 18) of a bridge (10),
by
- computing a first model (42) of the first element and a second model (44) of the second element,
- defining a connecting straight line (34, 36, 38, 40) between the first model and the second model,
- computing edge curves (γ0, γ4) on the first model (42) and the second model (44), whereby the edge curves are defmed by origins of surface normal (56) of the models, which satisfy boundary conditions relative to the connecting line,
- computing offset curves (γ1, γ3) on the first model (42) and the second model (44) from the first edge curves (γ0, γ4), and
- connecting the first edge curves (γ0, γ4) and the offset curves (γ1, γ3) of the first model and the second model, and computing the connector on the basis of the course of the connection between the curves.

2. Method according to claim 1,
**whereby**
a third curve (γ2) that is passed through by the connecting straight line (76) is specified between the first model (42) and the second model (44), with the course of the connector being aligned to the connections between the first edge curves (γ0, γ4), the offset curves (γ1, γ3), and the third curve (γ2).

3. Method according to claim 1 or 2,
**whereby**
as boundary condition for position of the origin of the surface normal (56) defining the edge curve (γ0, γ4) an angle a is specified between the connecting straight line and the surface normal (56).

4. Method according to at least one of the preceding claims,
**whereby**
as boundary condition for position of the origin of the surface normal (56) defining the edge curve (γ0, γ4) a facing distance (d) is specified to be maintained relative to the preparation margin (64) of the first and/or second element.

5. Method according to at least one of the preceding claims,
**whereby**
as boundary condition for position of the origin of the surface normal (56) defining the edge curve (γ0, γ4) an angle a is specified between the surface normal (56) and the connecting straight line as well as an angle β, which extends between the connecting straight line (34) and a line extending between the origin of the surface normal (56) and a characteristic point of the first or second model, i.e. the centroid (48), whereby (α + β): 2 ≅ ϕ with 30° ≤ ϕ ≤ 90°, in particular 70° ≤ ϕ ≤ 90°.

6. Method according to at least one of the preceding claims,
**whereby**
the connecting straight line between the first and the second model passes through their centroids (46, 48), and/or pseudo-rotation axes, and/or principal axes of inertia.

7. Method according to claim 1, whereby at least one element is an pontic,
**whereby**
data for position and size of the pontic for the dental restoration to be produced are retrieved from a data library and subsequently the connecting straight line is specified.

8. Method according to claim 1,
with the method steps:
- scanning a physical model (25) such as a stump,
- computing a three-dimensional model (28) from measured point cloud (26) acquired by the scanning,
- computing from the three-dimensional model (28) a three-dimensional model (30) of the coping(12, 14) as the first or second model,
- parameterizing the three-dimensional coping model (30) into a two-dimensional parameter space (32), in which each point corresponds to an X, Y, Z coordinate and a normal vector in the three-dimensional space of the coping, and
- determining the first edge curve (γ0, γ4) from the parameterized two-dimensional space.

9. Method according to claim 1,
with the method steps:
- computing a three-dimensional model as the first or second model of the pontic (16, 18) selected from the library,
- parameterizing the three-dimensional model into a two-dimensional parameter space (32), in which each point corresponds to a X, Y, Z coordinate and a normal vector in the three-dimensional space, and
- determining the edge curve (γ0, γ4) from the parameterized two-dimensional space.

10. Method according to claim 9,
**whereby**
rounding radii between the connector (20, 22, 24) and the first or second element are computed from the course of the edge curve (γ0, γ4) and the offset curve (γ1, γ3) computed therefrom.

11. Method according to at least one of the preceding claims,
**whereby**
the third curve γ2 possesses a circular shape, which in its centre is passed through by a second centroid-connecting straight line (76), which extends between the centroids of the edge curves or of the surfaces (78, 80) enclosed by the edge curves.

12. Method according to claim 11,
**whereby**
the third curve (γ2) is passed through by the second centroid-connecting straight line (76) in the middle between the centroids.

13. Method according to claim 11 or 12,
**whereby**
the third curve (γ2) runs in a plane (82), which is defined by direction vectors originating in centres of additional third centroid-connecting straight lines (112, 114, 116), which extend between centroids of equal segments (88, 90, 92, 94, 96, 98) of the edge curves or of surface regions of the surfaces of the first and second model enclosed by the edge curves.

14. Method according to claim 13,
**whereby**
each edge curve (γ0, γ4) is subdivided into three equal segments (88, 90, 92, 94, 96, 98), and from each centroid (100, 102, 104, 106, 108, 110) of the segment originates one of the third centroid-connecting straight lines (112, 114, 116).

15. Method according to at least one of claims 11 to 14,
**whereby**
the radius of the third curve (γ2) exactly or approximately corresponds to one half of the sum of the average radii of the edge curves (γ0, γ4) of the first and second model.

16. Method according to at least one of claims 11 to 15,
**whereby**
the gingiva side of the pontic (16, 18) under consideration of the course of the gingiva maintains a minimum distance to the latter.

17. Method according to at least one of claims 11 to 15,
**whereby**
the third curve (γ2) has a geometry different from that of a circle, e.g. a polygonal geometry.

## Revendications

1. Procédé pour construire un élément de liaison (20, 22, 24) entre un premier et un deuxième éléments (12, 14, 16, 18) d'une reconstruction dentaire, tels qu'éléments de liaison entre coiffe (12, 14) et coiffe (12, 14), ou entre coiffe (12, 14) et pontique (16, 18), ou entre pontique (16, 18) et pontique (16, 18), faisant partie d'un bridge, ce procédé comprenant :
- calcul d'un premier modèle (42) du premier élément et d'un second modèle (44) du second élément,
- définition d'une droite de liaison (34, 36, 38, 40) entre le premier modèle et le second modèle,
- calcul des courbes périphériques (γ0, γ4) sur le premier modèle (42), ainsi que sur le second modèle (44), où ces courbes périphériques sont tracées par les origines de normales à la surface (56) des modèles qui respectent des conditions limites par rapport à la ligne de liaison,
- calcul des courbes de décalage (γ1, γ3) sur le premier modèle (42), ainsi que sur le second modèle (44), à partir des premières courbes périphériques (γ0, γ4), et
- établissement d'une liaison entre les premières courbes périphériques (γ0, γ4) et les courbes de décalage (γ1, γ3) du premier modèle et celles du second modèle, et calcul de l'élément de liaison en se basant sur le tracé de la liaison entre les courbes.

2. Procédé selon revendication 1 dans lequel une troisième courbe (γ2) est définie qui relie le premier modèle (42) et le second modèle (44) et qui est traversée par la droite de liaison (76), et dans lequel la configuration de l'élément de liaison s'oriente sur les liaisons entre les premières courbes périphériques (γ0, γ4), les courbes de décalage (γ1, γ3) et la troisième courbe (γ2).

3. Procédé selon revendication 1 ou 2 dans lequel un angle α entre la droite de liaison et la normale à la surface (56) est défini comme condition limite pour le lieu d'origine de la courbe périphérique (γ0, γ4) définissant la normale à la surface (56).

4. Procédé selon au moins une des revendications précédentes dans lequel un écart de parement (d) à respecter par rapport à la limite de préparation (64) du premier et/ou du second modèle est défini comme condition limite pour le lieu d'origine de la courbe périphérique (γ0, γ4) définissant la normale à la surface (56).

5. Procédé selon au moins une des revendications précédentes dans lequel l'angle α entre la normale à la surface (56) et la droite de liaison et un angle β sont définis comme condition limite pour le lieu d'origine de la courbe périphérique (γ0, γ4) définissant la normale à la surface (56), ledit angle β se trouvant entre la droite de liaison (34) et une ligne s'étendant de l'origine de la normale à la surface (56) et un point caractéristique du premier ou du second modèle, tel le centre de gravité (48), et où (α + β) : 2 ≅ ϕ, avec 30° ≤ ϕ ≤ 90° et plus particulièrement 70° ≤ ϕ ≤ 90°.

6. Procédé selon au moins une des revendications précédentes dans lequel la droite de liaison entre le premier et le second modèle traverse leurs centres de gravité (46, 48) respectifs et/ou leurs axes de pseudorotation et/ou leurs axes principaux d'inertie.

7. Procédé selon revendication 1 dans lequel au moins un élément est un pontique et dans lequel les données de position et de dimension du pontique faisant partie de la reconstruction dentaire à fabriquer sont prélevées dans une bibliothèque de données et où la droite de liaison est ensuite définie.

8. Procédé selon revendication 1 comportant les étapes suivantes :
- numérisation d'un modèle physique (25), tel qu'un embout de dent,
- calcul d'un modèle tridimensionnel (28) à partir du nuage de points de mesure (26) obtenus par la numérisation,
- calcul d'un modèle tridimensionnel (30) de la coiffe (12, 14) comme premier ou comme second modèle à partir du modèle tridimensionnel (28),
- paramétrage du modèle tridimensionnel (30) de la coiffe dans un espace de paramétrage bidimensionnel (32) dans lequel chaque point correspond à une coordonnée X, Y et Z, ainsi qu'à un vecteur normal dans l'espace tridimensionnel de la coiffe, et
- détermination de la première courbe périphérique (γ0, γ4) à partir de l'espace bidimensionnel paramétré.

9. Procédé selon revendication 1 comportant les étapes suivantes :
- calcul d'un modèle tridimensionnel comme premier ou second modèle du pontique (16, 18) prélevé dans la bibliothèque,
- paramétrage du modèle tridimensionnel dans un espace de paramétrage bidimensionnel (32) dans lequel chaque point correspond à une coordonnée X, Y et Z, ainsi qu'à un vecteur normal dans l'espace tridimensionnel, et
- détermination de la courbe périphérique (γ0, γ4) à partir de l'espace bidimensionnel paramétré.

10. Procédé selon revendication 9 dans lequel les rayons d'arrondi entre l'élément de liaison (20, 22, 24) et le premier ou second élément sont calculés à partir du tracé de la courbe périphérique (γ0, γ4) et de la courbe de décalage (γ1, γ3) calculée à partir de celle-ci.

11. Procédé selon au moins une des revendications précédentes dans lequel la troisième courbe (γ2) possède une forme circulaire traversée en son centre par une seconde droite (76) reliant les centres de gravité des courbes périphériques ou les centres de gravité des aires (78, 80) entourées par ces courbes périphériques.

12. Procédé selon revendication 11 dans lequel la troisième courbe (γ2) est traversée au milieu entre les centres de gravité par la seconde droite (76) reliant les centres de gravité.

13. Procédé selon revendication 11 ou 12 dans lequel la troisième courbe (γ2) s'étend dans un plan (82) défini par les vecteurs d'orientation partant des centres des troisièmes droites (112, 114, 116) reliant les centres de gravité de segments identiques (88, 90, 92, 94, 96, 98) des courbes périphériques ou les centres de gravité de zones d'aires du premier et du second modèle entourées par ces courbes périphériques.

14. Procédé selon revendication 13 dans lequel chaque courbe périphérique (γ0, γ4) est subdivisée en trois segments identiques (88, 90, 92, 94, 96, 98) et où chaque centre de gravité (100, 102, 104, 106, 108, 110) d'un segment est le point de départ d'une des troisièmes droites (112, 114, 116) reliant les centres de gravité.

15. Procédé selon au moins une des revendications 11 à 14 dans lequel la troisième courbe (γ2) présente un rayon qui correspond à la moitié ou environ à la moitié de la somme des rayons moyens des courbes périphériques (γ0, γ4) du premier et du second modèle.

16. Procédé selon au moins une des revendications 11 à 15 dans lequel le côté gingival du pontique (16, 18) respecte un écart minimal par rapport à la gencive compte tenu de la configuration de celle-ci.

17. Procédé selon au moins une des revendications 11 à 15 dans lequel la courbe périphérique (γ2) possède une géométrie différente d'un cercle telle qu'une géométrie polygonale.
